# EUROPÄISCHE PATENTSCHRIFT

(11) **EP 1 960 452 B1**
(45) Veröffentlichungstag und Bekanntmachung des Hinweises auf die Patenterteilung: **30.06.2010**
(21) Anmeldenummer: 06830201.7
(22) Anmeldetag: 30.11.2006
(51) Int. Cl.: C08G 18/48

(54) **VERFAHREN ZUR HERSTELLUNG VON VISKOELASTISCHEN POLYURETHAN-WEICHSCHAUMSTOFFEN**
PROCESS FOR PRODUCING VISCOELASTIC POLYURETHANE FOAMS
PROCEDE DE FABRICATION DE MATERIAUX VISCOELASTIQUES EN MOUSSE TENDRE DE POLYURETHANE

(30) Priorität: 05.12.2005 DE 102005058090
(43) Veröffentlichungstag der Anmeldung: 27.08.2008
(73) Patentinhaber: BASF SE, 67056 Ludwigshafen (DE)
(72) Erfinder: GÖTTKE, Stephan, 49377 Vechta (DE); LUTTER, Heinz-Dieter, 49459 Lembruch (DE); ELING, Berend, 49448 Lemförde (DE); WUJCIK, Steven Edward, Ann Arbor, Michigan 48105 (US); MUELLER, Jens, 49393 Lohne (DE)
(86) Internationale Anmeldenummer: PCT/EP2006/069092
(87) Internationale Veröffentlichungsnummer: WO 2007/065837

(56) Entgegenhaltungen:
- WO-A-93/05091
- WO-A-03/046041
- US-A1- 2004 044 091
- US-B1- 6 653 363

## Beschreibung

Gegenstand der Erfindung ist ein Verfahren zur Herstellung von viskoelastischen Polyurethan-Weichschaumstoffen durch Umsetzung von Polyisocyanaten mit Verbindüngen mit mindestens zwei mit Isocyanatgruppen reaktiven Wasserstoffatomen.

Viskoelastische Polyurethan-Weichschaumstoffe erlangen in den letzten Jahren eine immer größere Bedeutung. Ihr Einsatz erfolgt insbesondere zur Herstellung von Polstern, Matratzen oder zur Schwingungsdämpfung, beispielsweise bei der Teppichhinterschäumung.

Viskoelastische Polyurethan-Weichschaumstoffe zeichnen sich dadurch aus, dass ihre Glasübergangstemperatur in der Nähe der Raumtemperatur liegt.

Die Glasübergangstemperatur wird mittels dynamisch-mechanischer Analyse (DMA) bei einer Frequenz von 1 Hz und einem Temperaturbereich von -80 bis +200°C bestimmt. Die erfindungsgemäßen viskoelastischen Weichschäume zeichnen sich durch einen absoluten Maximalwert des Verlustmoduls tan delta im Temperaturbereich von - 10 bis 40°C, vorzugsweise -10 bis 35°C und insbesondere von -6 bis 35°C aus. Die viskoelastischen Schaumstoffe weisen insbesondere eine Rückprallelastizität nach DIN EN ISO 8307 unter 30 % sowie ein hohes Dämpfungsverhalten auf, welches sich durch einen Wert für tan delta > 0.2 bei Raumtemperatur ausdrückt.

Die Einstellung der viskoelastischen Eigenschaften erfolgt vorzugsweise durch die Wahl der Einsatzstoffe, insbesondere der Polyole.

Eine Möglichkeit zur Herstellung von viskoelastischen Schaustoffen ist der Einsatz von Gemischen aus vorzugsweise dreifunktionellen Polyetheralkoholen mit einer Hydroxylzahl von 20 bis 100 und mindestens einem vorzugsweise dreifunktionellen Polyetheralkohol mit einer Hydroxylzahl im Bereich zwischen 160 und 250 und im wesentlichen Propylenoxideinheiten in der Kette.

Nachteilig an derartigen Schaumstoffen ist, insbesondere bei der Verwendung von Toluylendiisocyanat (TDI) als Polyisocyanat, ihre hohe Geschlossenzelligkeit, die zu Problemen bei der Verarbeitung und zu verschlechterten mechanischen Eigenschaften führt.

Weiterhin können die viskoelastischen Eigenschaften dadurch erreicht werden, dass als Verbindungen mit mindestens zwei mit Isocyanatgruppen reaktiven Wasserstoffatomen Gemische aus mindestens einem Polyetheralkohol mit einem hohen Gehalt an Ethylenoxid, vorzugsweise mindestens 50 Gew.-%, und mindestens einem mit diesen Polyetheralkoholen unverträglichen Polyetheralkohol mit einem hohen Gehalt am Propylenoxid, vorzugsweise mindestens 90 Gew.-%, eingesetzt werden.

So beschreibt US 2004/0254256 viskoelastische Schaumstoffe, bei deren Herstellung die Polyolkomponente 30 bis 70 Gew.-Teile eines Polyetheralkohols mit einem hohen Anteil von Ethylenoxideinheiten in der Polyetherkette enthält. EP 1 240 228 beschreibt die Herstellung von viskoelastischen Schaumstoffen unter Verwendung von Polyetheralkoholen, die einen Gehalt an Ethylenoxid in der Polyetherkette von mindestens 50 Gew.-% und eine Hydroxylzahl im Bereich zwischen 40 und 50 aufweisen.

Durch den Einsatz der ethylenoxidreichen Polyetheralkohole wird die Offenzelligkeit der Schaumstoffe erhöht. Nachteilig an der Verwendung von Polyetheralkholen mit einem hohen Anteil an Ethylenoxid in der Kette ist die Erhöhung der Hydrophilie der Schaumstoffe. Dadurch quellen diese Schäume bis zu 40 Vol % im Kontakt mit Wasser auf. Dieses Quellverhalten ist für Anwendungen in feuchten Umgebungen inakzeptabel.

Eine weitere Möglichkeit der Einstellung von viskoelastischen Eigenschaften ist der Zusatz von Weichmachern und/oder Monoolen, wie beispielsweise in WO 02/088211 beschrieben. WO 01/25305 beschreibt zusätzlich den Einsatz von 30 - 70 Teilen Polymerpolyol zur Herstellung von viskoelastischen Schäumen.

In WO 04/0254256 wird ein Verfahren zur Herstellung von viskoelastischen Schaumstoffen beschrieben, bei dem als Polyolkomponente eine Mischung aus mindestens einem ethylenoxidreichen Polyetheralkohol und mindestens einem propylenoxidreichen Polyetheralkhol eingesetzt wird. Je nach dem Mengenverhältnis der eingesetzten Polyole untereinander kann die Hydrophilie der Schaumstoffe eingestellt werden.

Nachteilig an diesem Verfahren ist wiederum, dass die Schaumstoffe eine für viele Einsatzzwecke zu hohe Hydrophilie aufweisen.

Es war Aufgabe der vorliegenden Erfindung, viskoelastische hydrophobe Polyurethan-Weichschaumstoffe mit guten mechanischen Eigenschaften, insbesondere einem optimalen Druckverformungsrest, sowohl trocken als auch trocken und feucht, bereitzustellen, deren Herstellung unabhängig vom eingesetzten Polyisocyanat problemlos möglich ist.

Die Aufgabe konnte überraschenderweise dadurch gelöst werden, dass die Verbindungen mit mindestens zwei mit Isocyanaten reaktiven Wasserstoffatomen einen dreifunktionellen, im wesentlichen aus Propylenoxid aufgebauten Polyetheralkohol, einen zweifunktionellen, im wesentlichen aus Propylenoxid aufgebauten Polyetheralkohol und einen im wesentlichen aus Ethylenoxid aufgebauten Polyetheralkohol in einem speziellen Verhältnis zueinander enthalten.

Gegenstand der Erfindung ist demzufolge ein Verfahren zur Herstellung von viskoelastischen Polyurethan-Weichschaumstoffen durch Umsetzung von
a) Polyisocyanaten mit
b) Verbindungen mit mindestens zwei mit Isocyanatgruppen reaktiven Wasserstoffatomen,
c) Treibmitteln,
**dadurch gekennzeichnet, dass** die Verbindungen mit mindestens zwei mit Isocyanatgruppen reaktiven Wasserstoffatomen b)
b1) 70 bis 10 Gew.-Teile mindestens eines Polyetheralkohols, bestehend aus ausschließlich Polyoxypropyleneinheiten oder Polyoxypropyleneinheiten und maximal 20 Gew.-%., bezogen auf die Gesamtmenge der eingesetzten Alkylenoxide Polyoxyethyleneinheiten in der Polyetherkette, mit einer nominalen Funktionalität von 3 bis 6 und einer Hydroxylzahl im Bereich von 100 bis 300 mgKOH/g,
b2) 10 bis 70 Gew.-Teile mindestens eines Polyetherols bestehend aus ausschließlich Polyoxypropyleneinheiten oder Polyoxypropyleneinheiten und maximal 20 Gew.-%, bezogen auf die Gesamtmenge der eingesetzten Alkylenoxide, Polyoxyethyleneinheiten in der Polyetherkette, mit einer nominalen Funktionalität von 2 und einer Hydroxylzahl im Bereich von 50 bis 350 mgKOH/g,
b3) 10 bis 30 Gew.-Teile mindestens eines Polyetheralkohols bestehend aus ausschließlich Ethylenoxideinheiten oder Ethylenoxideinheiten und maximal 20 Gew.-%., bezogen auf die Gesamtmenge der eingesetzten Alkylenoxide, Polyoxypropyleneinheiten in der Polyetherkette, mit einer nominalen Funktionalität von 2 bis 3 und einer Hydroxylzahl im Bereich von 50 bis 550 mgKOH/g,
b4) 0 - 20 Gew.-Teile mindestens eines Graft-Polyetherols, herstellbar durch in-situ-Polymerisation von olefinisch ungesättigten Monomeren in einem Polyetheralkohol, bestehend aus Polyoxypropyleneinheiten oder Polyoxypropyleneinheiten und maximal 50 Gew.-%, bezogen auf die Gesamtmenge der eingesetzten Alkylenoxide, Polyoxyethyleneinheiten in der Polyetherkette, mit einer nominalen Funktionalität von 2 - 3 und einer Hydroxylzahl im Bereich von 20 - 40 mgKOH/g,
enthalten.

Vorzugsweise liegt die Funktionalität der Mischung aus b1) und b2) im Bereich zwischen größer 2 und 3.

Das Verhältnis der Summe der Gewichtsteile b1) und b2) zu b3) (b1+b2)/b3 liegt vorzugsweise im Bereich zwischen 90/10 und 70/30.

Das Verhältnis der Summe von b1) und b2) zu b4) (b1+b2)/b4 liegt vorzugsweise im Bereich zwischen 100/0 und 80/20.

Wenn bei den Polyetheralkoholen b1) bis b4) zwei Alkylenoxide verwendet werden, können diese in Form von Blöcken oder in Form einer Statistik angelagert werden.

Als Polyisocyanate a) können prinzipiell alle bekannten Verbindungen mit mindestens zwei Isocyanatgruppen im Molekül eingesetzt werden. Vorzugsweise werden Diisocyanate eingesetzt. Bevorzugt kommen für das erfindungsgemäße Verfahren Dipehylmethandiisocyanat (MDI) und/oder Toluylendiisocyanat (TDI) zum Einsatz.

Bei der Verwendung von TDI werden zumeist Gemische aus dem 2,4- und dem 2,6-Isomeren eingesetzt. Dabei sind die handelsüblichen Mischungen mit 80 % 2,4 und 60 % 2,6-TDI und 35 % 2,4 und 35 % 2,6-TDI besonders bevorzugt.

Bei der Verwendung von MDI können das reine 4,4'-Isomere, das reine 2,4'-Isomere sowie beliebige Mischungen der beiden Isomeren untereinander, die auch bis zu 5 Gew.-% des 2,2'-Isomeren enthalten können, eingesetzt werden. An Stelle der reinen Isocyanate oder im Gemisch mit diesen werden häufig sogenannte modifizierte Isocyanate eingesetzt, da reines MDI als Feststoff schwierig zu verarbeiten ist. Derartige modifizierte Isocyanate können beispielsweise durch Einbau von Gruppen in die Polyisocyanate entstehen. Beispiele für derartige Gruppen sind Urethan-, Allophanat-, Carbodiimid-, Uretonimin-, Isocyanurat-, Harnstoff- und Biuretgruppen. Besonders bevorzugt sind mit Urethangruppen modifizierte Polyisocyanate, die üblicherweise durch Umsetzung der Isocyanate mit einem Unterschuss an H-funktionellen Verbindungen hergestellt werden. Derartige Verbindungen werden häufig als NCO-Prepolymere bezeichnet. Ebenfalls besonders bevorzugt sind Carbodiimid- oder Uretonimin-haltige Polyisocyanate, die durch gezielte katalysierte Umsetzung von Isocyanaten mit sich selber entstehen. Weiterhin können Mischungen aus TDI und MDI eingesetzt werden.

Die für das erfindungsgemäße Verfahren eingesetzten Polyetheralkohole können nach den üblichen und bekannten Verfahren hergestellt werden. Dies erfolgt zumeist durch basisch, meist alkalisch, katalysierte Anlagerung niederer Alkylenoxide, zumeist Ethylenoxid und/oder Propylenoxid, an hydroxylfunktionelle Startsubstanzen.

Als Startsubstanzen für die zweifunktionellen Polyetheralkohole b2) werden zumeist Wasser und/oder zweifunktionelle Alkohole, wie Ethylenglykol und/oder Propylenglykol, eingesetzt.

Als Startsubstanzen für die dreifunktionellen Polyetheralkohole b1) werden zumeist 3-funktionelle Alkohole, wie Glyzerin oder Trimethylolpropan (TMP), eingesetzt.

Bei der Herstellung der Polyetheralkohole b3) können, je nach der gewünschten Funktionalität, die genannten zwei- und dreifunktionellen Startsubstanzen einzeln oder in Form von beliebigen Gemischen untereinander eingesetzt werden.

Als Alkylenoxide kommen, wie erwähnt, zumeist Ethylenoxid und/oder Propylenoxid zum Einsatz. Diese können einzeln, nacheinander oder im Gemisch miteinander angelagert werden.

In einer Ausführungsform der erfindungsgemäß verwendeten Polyetheralkohole können als Katalysator anstelle von basischen Verbindungen Multimetallcyanidverbindungen, auch als DMC-Katalysatoren, eingesetzt werden. Dies ist insbesondere bei den Polyetheralkoholen vorteilhaft, die ganz oder im wesentlichen aus Propylenoxid aufgebaut sind. Derartige Polyetheralkohole zeichnen sich insbesondere durch einen geringen Gehalt an ungesättigten Verbindungen, vorzugsweise von kleiner 0,010 meq/g aus.

Unter Graft-Polyolen b4) versteht man, wie oben ausgeführt, Polyetheralkohole, in denen in-situ olefinisch ungesättigte Monomere polymersiert wurden. Bevorzugte olefinisch ungesättigte Monomere sind Styrol und Acrylnitril. Bevorzugt sind Graft-Polyole mit einer Hydroxylzahl im Bereich zwischen 20 und 40 mgKOH/g und einem Feststoffgehalt im Bereich zwischen 30 und 50 Gew.-%. Die Polymere liegen in dem Polyetheralkohol in Form einer Dispersion vor.

In einer bevorzugten Ausführungsform des erfindungsgemäßen Verfahrens weisen die Graft-Polyole eine bimodale Teilchengrößenverteilung auf, wie in WO03/078496 beschrieben.

Gemeinsam mit den Verbindungen mit mindestens 2 mit Isocyanat reaktiven Gruppen können auch Kettenverlängerer und Vernetzer eingesetzt werden. Dabei handelt es sich vorzugsweise um H-funktionelle Verbindungen mit Molekulargewichten von 62 bis 400 g/mol, insbesondere 2- bis 3-funktionelle Alkohole, Amine oder Aminoalkohole. Ihre Menge beträgt insbesondere 0 bis 25, vorzugsweise 2 bis 12 Gewichtsteile, bezogen auf 100 Gewichtsteile Polyetheralkohol und/oder Polyesteralkohole.

Die Herstellung der erfindungsgemäßen Polyurethan-Weichschaumstoffe erfolgt üblicherweise in Anwesenheit von Treibmitteln, Katalysatoren und Hilfs- und/oder Zusatzstoffen.

Als Treibmittel wird vorzugsweise Wasser eingesetzt. Die Menge des eingesetzten Wassers richtet sich nach der angestrebten Dichte des Schaumstoffs und liegt vorzugsweise im Bereich zwischen Gew.- %, 1 - 5 Gew.-%, bezogen auf das Gewicht der Komponente b).

An Stelle von oder gemeinsam mit dem Wasser können auch sogenannte physikalisch wirkende Treibmittel eingesetzt werden. Hierbei handelt es sich vorzugsweise um gegenüber den Polyurethan-Aufbaukomponenten inerte Flüssigkeiten mit Siedepunkten unter 100°C, vorzugsweise unter 50°C, insbesondere im Bereich zwischen 50 und 30°C, die unter dem Einfluss der exothermen Polyadditionsreaktion verdampfen. Beispiele für derartige Flüssigkeiten sind Kohlenwasserstoffe, wie n-, Iso- und/oder Cyclopentan, Ether, Ketone, halogenierte Kohlenwasserstoffe, sofern sie kein Ozonabbaupotential aufweisen, oder Edelgase. Die Menge dieser physikalisch wirkenden Treibmittel beträgt zumeist 1 bis 20 Gew.-Teile, vorzugsweise 2 bis 15 Gew.-Teile, bezogen auf 100 Gew.-Teile der Verbindung mit mindestens 2 mit Isocyanat reaktiven Wasserstoffatomen. Die Menge der eingesetzten Treibmittel hängt von der angestrebten Dichte der Schaumstoffe ab.

Zur Durchführung der Umsetzung werden zumeist die üblichen Polyurethan-Katalysatoren eingesetzt. Hierbei handelt es sich beispielsweise um tertiäre Amine, wie Triethylendiamin, Metallsalze, wie Zinnverbindungen, sowie beliebige Mischungen aus diesen Verbindungen.

Als Hilfsmittel und/oder Zusatzstoffe werden beispielsweise Flammschutzmittel, oberflächenaktive Stoffe, Stabilisatoren, Zellregler, fungistatisch und bakteriostatisch wirkende Substanzen, Antistatika, Farbstoffe, Pigmente und Füllstoffe verwendet. Diese Stoffe werden dem Schaumsystem bei Bedarf zugesetzt, um ihm bestimmte Eigenschaften zu verleihen.

Nähere Angaben zu den verwendeten Komponenten sind beispielsweise dem Kunststoff-Handbuch, Band VII Polyurethane, Carl Hanser Verlag, München, Wien, 1. bis 3. Auflage, 1966, 1983 und 1993 zu entnehmen.

Üblicherweise werden die Verbindungen mit mindestens zwei mit Isocyanatgruppen reaktiven Wasserstoffatomen b), die Treibmittel c), die Katalysatoren sowie die gegebenenfalls mitverwendeten Hilfsmittel und/oder Zusatzstoffe zu einer sogenannten Polyolkomponente vermischt und in dieser Form mit den Polyisocyanaten a) zur Umsetzung gebracht.

Zur Herstellung der erfindungsgemäßen Polyurethan-Weichschaumstoffe werden die Ausgangsverbindungen zumeist bei Temperaturen von 0 bis 100°C, vorzugsweise 15 bis 60°C, in solchen Mengenverhältnissen zur Reaktion gebracht, dass pro NCO-Gruppe 0,5 bis 2, vorzugsweise 0,8 bis 1,3 und insbesondere ungefähr 1 reaktive(s) Wasserstoffatom(e) vorliegen und, bei der Verwendung von Wasser als Treibmittel, die beiden Wasserstoffatome des Wassers in die Gesamtzahl der reaktiven Wasserstoffatome mit einberechnet werden.

Die erfindungsgemäßen Polyurethan-Weichschaumstoffe werden vorzugsweise nach dem one-shot-Verfahren durch Vermischen der Polyol- und der Isocyanatkomponente hergestellt, wobei die Polyolkomponente, wie beschrieben, die Verbindungen mit mindestens zwei mit Isocyanat reaktiven Wasserstoffatomen, gegebenenfalls das Monool sowie Katalysatoren, Treibmittel sowie Hilfs- und/oder Zusatzstoffe und die Isocyanatkomponente das Polyisocyanat sowie gegebenenfalls Katalysatoren, physikalische Treibmittel sowie Hilfs- und/oder Zusatzstoffe enthält. Die beiden Komponenten werden intensiv vermischt und zumeist als Blockschaum verschäumt.

Die erfindungsgemäßen Polyurethan-Weichschaumstoffe weisen hervorragende viskoelastische Eigenschaften auf, da ihre Glasübergangstemperatur in der Nähe der Raumtemperatur liegt.

Die Glasübergangstemperatur wird, wie beschrieben, mittels dynamisch-mechanischer Analyse (DMA) bei einer Frequenz von 1 Hz und einem Temperaturbereich von - 80 bis + 200°C bei einer Deformation von 0,3 % bestimmt. Das Temperaturprogramm wird in 5°C-Schritten durchgeführt. Die erfindungsgemäßen viskoelastischen Weichschäume zeichnen sich durch eine Glasübergangstemperatur, ausgedrückt durch einen absoluten Maximalwert des Verlustmoduls tan delta im Temperaturbereich von -10 bis 40°C, vorzugsweise -10 bis 35°C und insbesondere von -6 bis 35°C aus. Die viskoelastischen Schaumstoffe weisen insbesondere eine Rückprallelastizität nach DIN EN ISO 8307 unter 30 % sowie ein hohes Dämpfungsverhalten auf, welches sich durch einen Wert für tan delta > 0.2 bei Raumtemperatur ausdrückt.

Sie werden insbesondere für dämmende und dämpfende Elemente, insbesondere im Fahrzeugbau, für Polster-, Sitz- oder Liegemöbel, für Matratzen oder Kissen im orthopädischen und/oder medizinischen Bereich oder für Schuh(einlege)sohlen eingesetzt. Ein weiteres Einsatzgebiet sind Autosicherheitsteile, Auflageflächen, Armlehnen und ähnliche Teile im Möbelbereich und im Automobilbau

Die Erfindung soll an den nachfolgenden Beispielen näher beschrieben werden.

### Beispiele 1 bis 9

Aus den in der Tabelle angegebenen Polyolen, Katalysatoren und Zusatzstoffen wurde durch Mischung eine Polyolkomponente hergestellt. die angegebenen Mengen sind gewichtsteile. Die Polyolkomponente wurde mit 100 Gewichtsteilen Toluylendiisocyanat 80/20 in den Beispielen 1 bis 6 bei dem angegebenen Index im Handansatz vermischt und die Mischung in eine offene Metallform mit den Abmessungen 40x40x40 cm gegeben, wo sie zum Weichschaum aushärtete. In Beispiel 7 erfolgte die Verschäumung maschinell.

Die Schäumparameter und die mechanischen Eigenschaften der Schaumstoffe sind ebenfalls in Tabelle 1 angegeben.

| | |
|---|---|
| Polyol 1 | Polyetheralkohol auf Basis von Trimethylolpropan und Propylenoxid, Hydroxylzahl 160 mg KOH/g |
| Polyol 2 | Polyetheralkohol auf Basis von Glycerin und Propylenoxid, Hydroxylzahl 180 mg KOH/g |
| Polyol 3 | Polyetheralkohol auf Basis von Glycerin und Propylenoxid, Hydroxylzahl 200 mg KOH/g |
| g Polyol 4 | Polyetheralkohol auf Basis von Propylenglykol und Propylenoxid, Hydroxylzahl 55 mg KOH/ |
| Polyol 5 | Polyetheralkohol auf Basis von Propylenglykol und Propylenoxid, Hydroxylzahl 100 mg KOH/g |
| Polyol 6 | Polyetheralkohol auf Basis von Propylenglykol und Propylenoxid, Hydroxylzahl 240 mg KOH/g |
| Polyol 7 | Polyetheralkohol auf Basis von Ethylenglykol und Ethylenoxid, Hydroxylzahl 190 mg KOH/g |
| Polyol 8 | Polyethylenglykol, Hydroxylzahl 280 mg KOH/g |
| Stabilisator 1 | Tegostab® BF 2370 Goldschmidt |
| Stabilisator 2 | Dabco® 198 -der Firma Air Products |
| Katalysator 2 | Lupragen® N201 - Aminkatalysator der Firma BASF AG |
| Katalysator 3 | Lupragen® N 206 - Aminkatalysator der Firma BASF AG |
| Katalysator 4 | Kosmos® 29 - Zinnkatalysator der Firma Air Products |
| Katalysator 5 | Kosmos® EF - Zinnkatalysator der Firma Air Products |

| Beispiel | 1 | 2 | 3 | 4 | 5 (V) | 6 (V) | 7* |
|---|---|---|---|---|---|---|---|
| Polyol 1 | 10 | 70 | - | - | 100 | 90 | 37 |
| Polyol 2 | - | - | 40 | | - | - | |
| Polyol 3 | - | - | - | 40 | - | - | |
| Polyol 4 | 20 | 10 | 15 | 25 | - | - | |
| Polyol 5 | - | - | - | - | - | - | |
| Polyol 6 | 50 | - | 25 | 15 | - | - | 23,3 |
| Polyol 7 | 20 | 20 | 20 | 20 | - | 10 | 9,2 |
| Polyol 8 | | | | | | | 18,5 |
| Stabilisator 1 | 0,65 | 0,35 | 0,35 | 0,5 | 0,2 | 0,25 | |
| Stabilisator 2 | - | - | - | 0,2 | 0,2 | | 0,55 |
| Katalysator 2 | 0,3 | 0,3 | 0,15- | 0,2 | 0,3 | 0,3 | 0,45 |
| Katalysator 3 | 0,1 | 0,1 | 0,05 | 0,2 | 0,1 | 0,1 | |
| Katalysator 4 | 0,15 | 0,175 | 0,1 | | 0,31 | 0,23 | 0,05 |
| Katalysator | | | | 0,21 | | | 0,15 |
| Wasser | 2 | 2 | 2 | 2 | 2 | 2 | 2 |
| TDI | 100 | 100 | 100 | 100 | 100 | 100 | 100 |
| Startzeit [sec] | 12 | 11 | 15 | 7 - 8 | - | - | - |
| Abbindezeit [sec] | 90 | 115 | 110 | 100 | | | 240** |
| Abblaszeit [sec] | 120 - 130 | 160 - 180 | 130 - 150 | 125 - 160 | | | |
| Steighöhe [cm] | 19,9 | 17,8 | 20,2 | 20,6 | | | |
| Steighöhe nach 20 min [cm] | 19 | 17,4 | 19 | 20 | | | |
| Tan delta (max) bei °C | 15.05 | 14,65 | 15 | 30,8 | | | -5,7 |
| Tan delta bei 20 | 0,67 | 0,62 | 0,81 | 0,66 | | | 0,28 |
| Raumgewicht [kg/m³] | 43,6 | 42,1 | 43 | 41,3 | | | 38,6 |
| Stauchhärte (40 %) [kPa] | 1 | 1,8 | 1,3 | 1,2 | | | 2,4 |
| Eindruckhärte (40 %) [kPa] | 39 | 69 | 52 | 40 | | | 93 |
| Zugfestigkeit [kPa] | 56 | 53 | 42 | 63 | | | 55 |
| Bruchdehnung [%] | 298 | 163 | 149 | 209 | | | 152 |
| DVR (22 h/70°C/50 %) [%] | 12,7 | 1,5 | 2,5 | 1,7 | | | 9,5 |
| WCS [%] | 36,2 | 2,6 | 2,9 | 2,7 | | | 12,32 |
| RPE [%] | 6 | 7 | 6 | 5 | | | 15 |

| | | | | | | | |
|---|---|---|---|---|---|---|---|
| RPE - Rückprallelastizität * Verschäumung mittels Maschine ** Steigzeit | | | | | | | |

Bei den Beispielen 5 und 6 konnten keine mechanischen Werte bestimmt werden, da die Schäume schrumpften.

Die Bestimmung des Raumgewichts erfolgte nach DIN EN ISO 845, die Bestimmung der Stauchhärte erfolgte nach DIN EN ISO 3386-1, die Bestimmung der Eindruckhärte erfolgte nach DIN EN ISO 2439, die Bestimmung der Zugfestigkeit erfolgte nach DIN EN ISO 1798, die Bestimmung der Bruchdehnung erfolgte nach DIN EN ISO 1798, die Bestimmung des Druckverformungsrests (DVR) erfolgte nach DIN EN ISO 1856 und die Bestimmung der Rückprallelastizität (RPE) erfolgte nach DIN EN ISO 8307.

Die Bestimmung des Wet Compression Set (WCS) erfolgte nach internen Prüfmethoden.

Weiterhin wurde von den Schaumstoffen der Beispiele 1, 2 und 3 das Quellverhalten untersucht.

| Schaum nach Beispiel | 1 | 2 | 3 |
|---|---|---|---|
| Quellverhalten % | 7,4 | 4,3 | 5,7 |
| Volumen vorher | 145,4 | 140,4 | 140,4 |
| Volumen nachher | 156,2 | 146,4 | 148,4 |
| Maß des Probekörpers vorher | 6,1x6,1x3,9 | 6x6x3,9 | 6x6x3,9 |
| Maß des Probekörpers nachher | 6,2x6,3x4 | 6,05x6,05x4 | 6,1x6,1x4 |

Zur Untersuchung des Quellverhaltens wurde ein Probekörper des Schaumstoffs für eine Stunde in Wasser gelegt. Vor und nach der Lagerung wurden die Maße des Probekörpers bestimmt.

Die Ergebnisse zeigen, dass die untersuchten Schaumstoffe nicht hydrophil sind.

## Patentansprüche

1. Verfahren zur Herstellung von viskoelastischen Polyurethan-Weichschaumstoffen durch Umsetzung von
a) Polyisocyanaten mit
b) Verbindungen mit mindestens zwei mit Isocyanatgruppen reaktiven Wasserstoffatomen,
c) Treibmitteln,
**dadurch gekennzeichnet, dass** die Verbindungen mit mindestens zwei mit Isocyanatgruppen reaktiven Wasserstoffatomen b)
b1) 70 bis 10 Gew.-Teile mindestens eines Polyetheralkohols, bestehend aus ausschließlich Polyoxypropyleneinheiten oder Polyoxypropyleneinheiten und maximal 20 Gew.-%., bezogen auf die Gesamtmenge der eingesetzten Alkylenoxide, Polyoxyethyleneinheiten in der Polyetherkette, mit einer nominalen Funktionalität von 3 bis 6 und einer Hydroxylzahl im Bereich von 100 bis 300 mgKOH/g,
b2) 10 bis 70 Gew.-Teile mindestens eines Polyetherols bestehend aus ausschließlich Polyoxypropyleneinheiten oder Polyoxypropyleneinheiten und maximal 20 Gew.-%., bezogen auf die Gesamtmenge der eingesetzten Alkylenoxide, Polyoxyethyleneinheiten in der Polyetherkette, mit einer nominalen Funktionalität von 2 und einer Hydroxylzahl im Bereich von 50 bis 350 mgKOH/g,
b3) 10 bis 30 Gew.-Teile mindestens eines Polyetheralkohols bestehend aus ausschließlich Ethylenoxideinheiten oder Ethylenoxideinheiten und maximal 20 Gew.-%., bezogen auf die Gesamtmenge der eingesetzten Alkylenoxide, Polyoxypropyleneinheiten in der Polyetherkette, mit einer nominalen Funktionalität von 2 bis 3 und einer Hydroxylzahl im Bereich von 50 bis 550 mgKOH/g,
b4) 0 bis 20 Gew.-Teile mindestens eines Graft-Polyetherols, herstellbar durch in-situ-Polymerisation von olefinisch ungesättigten Monomeren in einem Polyetheralkohol, bestehend aus Polyoxypropyleneinheiten oder Polyoxypropyleneinheiten und maximal 50 Gew.-%, bezogen auf die Gesamtmenge der eingesetzten Alkylenoxide, Polyoxyethyleneinheiten in der Polyetherkette, mit einer nominalen Funktionalität von 2 bis 3 und einer Hydroxylzahl im Bereich von 20 bis 40 mgKOH/g,
enthalten.

2. Verfahren nach Anspruch 1, **dadurch gekennzeichnet, dass** die Funktionalität der Mischung aus b1) und b2) im Bereich zwischen größer 2 und 3 liegt.

3. Verfahren nach Anspruch 1, **dadurch gekennzeichnet, dass** das Verhältnis der Gewichtsteile der Summe von b1) und b2) zu b3 (b1+b2)/b3 im Bereich zwischen 90/10 und 70/30 liegt.

4. Verfahren nach Anspruch 1, **dadurch gekennzeichnet, dass** die Summe von b1) und b2) zu b4) (b1+b2)/b4 im Bereich zwischen 100/0 und 80/20 liegt.

5. Verfahren nach Anspruch 1, **dadurch gekennzeichnet, dass** bei der Herstellung der Polyetheralkohole b1) bis b4) bei der Verwendung von zwei Alkylenoxiden diese in Form von Blöcken angelagert werden.

6. Verfahren nach Anspruch 1, **dadurch gekennzeichnet, dass** bei der Herstellung der Polyetheralkohole b1) bis b4) bei der Verwendung von zwei Alkylenoxiden diese in Form einer Statistik angelagert werden.

7. Verfahren nach Anspruch 1, **dadurch gekennzeichnet, dass** als Polyisocyanat a) Diphenylmethandiisocyanat eingesetzt wird.

8. Verfahren nach Anspruch 1, **dadurch gekennzeichnet, dass** als Polyisocyanat a) Gemische aus Diphenylmethandiisocyanat und Polyphenylepolymethylenpolyisocyanaten eingesetzt werden.

9. Verfahren nach Anspruch 1, **dadurch gekennzeichnet, dass** als Polyisocyanat a) Toluylendiisocyanat eingesetzt wird.

10. Verfahren nach Anspruch 1, **dadurch gekennzeichnet, dass** als Treibmittel Wasser eingesetzt wird.

11. Verfahren nach Anspruch 1, **dadurch gekennzeichnet, dass** als Treibmittel Wasser in einer Menge von 1 bis 5 Gew.-%, bezogen auf die Menge aller Einsatzkomponenten, eingesetzt wird.

12. Viskoelastische Polyurethan-Weichschaumstoffe, herstellbar nach einem der Ansprüche 1 bis 11.

## Claims

1. A process for producing viscoelastic flexible polyurethane foams by reacting
a) polyisocyanates with
b) compounds having at least two hydrogen atoms which are reactive toward isocyanate groups,
c) blowing agents,
wherein the compounds having at least two hydrogen atoms which are reactive toward isocyanate groups b) comprise
b1) from 70 to 10 parts by weight of at least one polyether alcohol consisting of exclusively polyoxypropylene units or polyoxypropylene units and not more than 20% by weight, based on the total amount of alkylene oxides used, of polyoxyethylene units in the polyether chain and having a nominal functionality of from 3 to 6 and a hydroxyl number in the range from 100 to 300 mg KOH/g,
b2) from 10 to 70 parts by weight of at least one polyetherol consisting of exclusively polyoxypropylene units or polyoxypropylene units and not more than 20% by weight, based on the total amount of alkylene oxides used, of polyoxyethylene units in the polyether chain and having a nominal functionality of 2 and a hydroxyl number in the range from 50 to 350 mg KOH/g,
b3) from 10 to 30 parts by weight of at least one polyether alcohol consisting of exclusively ethylene oxide units or ethylene oxide units and not more than 20% by weight, based on the total amount of alkylene oxides used, of polyoxypropylene units in the polyether chain and having a nominal functionality of from 2 to 3 and a hydroxyl number in the range from 50 to 550 mg KOH/g,
b4) from 0 to 20 parts by weight of at least one graft polyetherol which can be prepared by in-situ polymerization of olefinically unsaturated monomers in a polyether alcohol consisting of polyoxypropylene units or polyoxypropylene units and not more than 50% by weight, based on the total amount of alkylene oxides used, of polyoxyethylene units in the polyether chain and having a nominal functionality of from 2 to 3 and a hydroxyl number in the range from 20 to 40 mg KOH/g.

2. The process according to claim 1, wherein the functionality of the mixture of b1) and b2) is in the range from > 2 to 3.

3. The process according to claim 1, wherein the ratio of the parts by weight of the sum of b1) and b2) to b3 (b1+b2)/b3 is in the range from 90/10 to 70/30.

4. The process according to claim 1, wherein the sum of b1) and b2) to b4) (b1+b2)/b4 is in the range from 100/0 to 80/20.

5. The process according to claim 1, wherein when two alkylene oxides are used in the preparation of the polyether alcohols b1) to b4), the alkylene oxides are added on in the form of blocks.

6. The process according to claim 1, wherein when two alkylene oxides are used in the preparation of the polyether alcohols b1) to b4), the alkylene oxides are added on randomly.

7. The process according to claim 1, wherein diphenylmethane diisocyanate is used as polyisocyanate a).

8. The process according to claim 1, wherein mixtures of diphenylmethane diisocyanate and polyphenylenepolymethylene polyisocyanates are used as polyisocyanate a).

9. The process according to claim 1, wherein tolylene diisocyanate is used as polyisocyanate a).

10. The process according to claim 1, wherein water is used as blowing agent.

11. The process according to claim 1, wherein water is used as blowing agent in an amount of from 1 to 5% by weight, based on the amount of all starting components.

12. A viscoelastic flexible polyurethane foam which can be produced according to any of claims 1 to 11.

## Revendications

1. Procédé pour la production de mousses souples de polyuréthanne viscoélastiques, par mise en réaction
a) de polyisocyanates avec
b) des composés comportant au moins deux atomes d'hydrogène réactifs avec des groupes isocyanate,
c) des agents d'expansion,
**caractérisé en ce que** les composés comportant au moins deux atomes d'hydrogène réactifs avec des groupes isocyanate b) contiennent
b1) 70 à 10 parties en poids d'au moins un polyétheralcool constitué exclusivement de motifs polyoxypropylène ou de motifs polyoxypropylène et d'au maximum 20% en poids, par rapport à la quantité totale des oxydes d'alkylène utilisés, de motifs polyoxyéthylène dans la chaîne du polyéther, ayant une fonctionnalité nominale de 3 à 6 et un indice de groupes hydroxy dans la plage de 100 à 300 mg de KOH/g,
b2) 10 à 70 parties en poids d'au moins un polyétherol constitué exclusivement de motifs polyoxypropylène ou de motifs polyoxypropylène et d'au maximum 20% en poids, par rapport à la quantité totale des oxydes d'alkylène utilisés, de motifs polyoxyéthylène dans la chaîne du polyéther, ayant une fonctionnalité nominale de 2 et un indice de groupes hydroxy dans la plage de 50 à 350 mg de KOH/g,
b3) 10 à 30 parties en poids d'au moins un polyétheralcool constitué exclusivement de motifs oxyde d'éthylène ou de motifs d'éthylène et d'au maximum 20% en poids, par rapport à la quantité totale des oxydes d'alkylène utilisés, de motifs polyoxypropylène dans la chaîne du polyéther, ayant une fonctionnalité nominale de 2 à 3 et un indice de groupes hydroxy dans la plage de 50 à 550 mg de KOH/g,
b4) 0 à 20 parties en poids d'au moins un polyétherol greffé, pouvant être préparé par polymérisation in situ de monomères à insaturation oléfinique dans un polyétheralcool, constitué de motifs polyoxypropylène ou de motifs polyoxypropylène et d'au maximum 50% en poids, par rapport à la quantité totale des oxydes d'alkylène utilisés, de motifs polyoxyéthylène dans la chaîne du polyéther, ayant une fonctionnalité nominale de 2 à 3 et un indice de groupes hydroxy dans la plage de 20 à 40 mg de KOH/g.

2. Procédé selon la revendication 1, **caractérisé en ce que** la fonctionnalité du mélange de b1) et b2) se situe dans la plage comprise entre plus de 2 et 3.

3. Procédé selon la revendication 1, **caractérisé en ce que** le rapport des parties en poids de la somme de b1) et b2) à b3) (b1+b2)/b3 se situe dans la plage comprise entre 90:10 et 70:30.

4. Procédé selon la revendication 1, **caractérisé en ce que** la somme de b1) et b2) à b4) (b1+b2)/b4) se situe dans la plage comprise entre 100:0 et 80:20.

5. Procédé selon la revendication 1, **caractérisé en ce que** dans la préparation des polyétheralcools b1) à b4) dans le cas de l'utilisation de deux oxydes d'alkylène ceux-ci sont fixés par addition sous forme de séquences.

6. Procédé selon la revendication 1, **caractérisé en ce que** dans la préparation des polyétheralcools b1) à b4) dans le cas de l'utilisation de deux oxydes d'alkylène ceux-ci sont fixés par addition sous forme d'une statistique.

7. Procédé selon la revendication 1, **caractérisé en ce qu'**on utilise comme polyisocyanate a) du diphénylméthane-diisocyanate.

8. Procédé selon la revendication 1, **caractérisé en ce qu'**on utilise comme polyisocyanate a) des mélanges de diphénylméthane-diisocyanate et polyphénylène-polyméthylène-polyisocyanates.

9. Procédé selon la revendication 1, **caractérisé en ce qu'**on utilise comme polyisocyanate a) du toluylène-diisocyanate.

10. Procédé selon la revendication 1, **caractérisé en ce qu'**on utilise l'eau comme agent d'expansion.

11. Procédé selon la revendication 1, **caractérisé en ce que** comme agent d'expansion on utilise de l'eau en une quantité de 1 à 5 % en poids, par rapport à la quantité de tous les composants utilisés.

12. Mousses souples de polyuréthanne viscoélastiques, pouvant être produites selon l'une quelconque des revendications 1 à 11.
